(19) **Europäisches Patentamt**

**European Patent Office**

**Office européen des brevets**

(11) **EP 0 972 824 B1**

(12) **EUROPEAN PATENT SPECIFICATION**

(45) Date of publication and mention
of the grant of the patent:
**10.07.2002 Bulletin 2002/28**

(51) Int Cl.[7]: **C11D 17/00**, C11D 3/20,
C11D 3/12, C11D 3/37,
C11D 3/10, C02F 5/08

(21) Application number: **99202991.8**

(22) Date of filing: **22.10.1997**

(54) **Water-softening and detergent compositions**

Wasserenthärtende Zusammensetzungen und Waschmittelzusammensetzungen

Compositions pour adoucir l'eau et compositions détergentes

(84) Designated Contracting States:
**DE ES FR GB IE IT NL**

(30) Priority: **22.10.1996 GB 9621979**

(43) Date of publication of application:
**19.01.2000 Bulletin 2000/03**

(62) Document number(s) of the earlier application(s) in
accordance with Art. 76 EPC:
**97308427.0 / 0 838 519**

(73) Proprietors:
• **UNILEVER PLC**
**London EC4P 4BQ (GB)**
Designated Contracting States:
**GB IE**
• **UNILEVER N.V.**
**3013 AL Rotterdam (NL)**
Designated Contracting States:
**DE ES FR IT NL**

(72) Inventor: **Gordon, James William**
**Ulverston, Cumbria LA12 7SH (GB)**

(74) Representative: **Hodgetts, Catherine Dawn et al**
**Unilever N.V.,**
**Patent Department,**
**P.O. Box 137**
**3130 AC Vlaardingen (NL)**

(56) References cited:
**EP-A- 0 002 293       EP-A- 0 711 827**
**WO-A-90/02165       WO-A-96/06156**
**US-A- 4 642 197**

## Description

This invention relates to compositions in the form of tablets, containing a water-softening agent. These tablets may be embodied as detergent compositions for use in fabric washing, or as water-softening tablets, which could be used in fabric washing jointly with a composition containing detergent active, or could possibly be used in other applications, e.g. in machine dishwashing as an anti-limescale product.

Detergent compositions in tablet form are described, for example, in GB 911204 (Unilever), US 3953350 (Kao), JP 60-015500A (Lion), JP 60-135497A (Lion) and JP 60-135498A (Lion); and are sold commercially in Spain. Tablets have several advantages over powdered products: they do not require measuring and are thus easier to handle and dispense into the washload, and they are more compact, hence facilitating more economical storage.

Detergent tablets are generally made by compressing or compacting a detergent powder, which includes detergent active and detergency builder. EP-A-522766 explains that difficulty has been found in providing tablets which have adequate strength when dry, yet disperse and dissolve quickly when added to wash water. The problem has proved especially difficult with compositions containing insoluble aluminosilicate as detergency builder.

This prior document teaches that at least some particles of the composition should be coated with a binder which helps to hold the tablet together and allows a tablet to be made using a lower compaction pressure. The binder can also function as a disintegrant.

EP-A-482627 teaches that a detergent composition for compaction into tablets with improved solubility should include potassium carbonate together with nonionic surfactant.

EP-A-711827 teaches that speed of disintegration of tablets can be improved by including a highly water-soluble citrate. Tablet compositions exemplified in that document include sodium citrate dihydrate and also polyethylene glycol as an organic polymeric binder. This document also mentions that sodium acetate can be included in a composition as a lubricant to aid tabletting. The trihydrate of sodium acetate is not named. The amount of lubricant is not stated, but it would be appropriate to include only a small amount.

WO 90/02165 mentions a range of materials including sodium acetate trihydrate as tableting aids, preferably used as a small percentage of the composition and preferably of fine particle size. A range of possible functions is attributed indiscriminately to these tableting aids.

In the examples of US 4,642,197 5% of anhydrous sodium acetate is used as an additional disintegration aid in combination with another disintegrating aid in washing additive tablets.

WO 96/06156 mentions that hydrated materials are useful when making tablets with the aid of microwave radiation to cause sintering.

Surprisingly, we have now found that the speed of disintegration of tablets can be enhanced by including potassium acetate. This material has been found to be more effective than some other materials, including sodium citrate dihydrate, even without polymeric binder present.

Broadly, the present invention provides a tablet of a compacted particulate composition wherein the tablet or a region thereof contains a water-softening agent and the composition also includes potassium acetate.

The amount of water-softening agent is at least 15% by weight of the composition. Depending on the function for which the tablets are intended the amount may range up to 90 or 93% by weight. In significant forms of this invention there is at least 15%, by weight of the composition, of a water-insoluble water softening agent.

The amount of the potassium acetate is at least 7% by weight of the composition, but less than 10% by weight.

It is possible that the potassium acetate might be used jointly with sodium citrate dihydrate because sodium citrate dihydrate may function as a water-soluble water softening agent/detergency builder as well as enhancing the speed of disintegration of a tablet in water. Thus a tablet composition might contain from 7% to less than 10% of potassium acetate, accompanied by 5% to 20% by weight of sodium citrate dihydrate.

Accordingly, the present invention provides a tablet of a compacted particulate composition wherein the tablet or a region thereof comprises from 15 to 93% by weight of a water-softening agent and salt which is mixed with the water-softening agent characterised in that said salt is 7% to less than 10% by weight of potassium acetate optionally accompanied by sodium citrate dihydrate, provided that the total quantity of potassium acetate and sodium citrate dihydrate is from 7 to 50% by weight of the tablet or said region thereof.

In another aspect, this invention provides the use of 7% to less than 10% by weight of potassium acetate in such a tablet of compacted particulate composition or a region thereof, to enhance the disintegration of the tablet in water.

This invention utilises potassium acetate to promote disintegration of a tablet in water.

Although potassium acetate is very effective, it is hygroscopic.

Water-softening agent

It is particularly envisaged that this invention will be applied to tablets containing water-insoluble water softening agent, notably alkali-metal aluminosilicate. However, it could be applied in tablets containing a soluble water-softening agent such as a condensed phosphate. It could be applied in tablets containing both soluble and insoluble water softening agents - as might be used in countries where a restricted quantity of phosphate detergency builder is permitted.

It is very well known that water-insoluble alkali metal aluminosilicates can function to soften water, removing calcium ions and to a lesser extent magnesium ions by ion exchange. Aluminosilicates have become strongly favoured as environmentally acceptable detergency builders.

Alkali metal (preferably sodium) aluminosilicates used in tablets of the present invention may be either crystalline, amorphous or a mixture of the two. Such aluminosilicates generally have a calcium ion exchange capacity of at least 50 mg CaO per gram of aluminosilicate, comply with a general formula:

$$0.8\text{-}1.5 \quad Na_2O . Al_2O_3 . 0.8\text{-}6 \quad SiO_2$$

and incorporate some water. Preferred sodium aluminosilicates within the above formula contain 1.5-3.5 $SiO_2$ units. Both amorphous and crystalline aluminosilicates can be prepared by reaction between sodium silicate and sodium aluminate, as amply described in the literature.

Suitable crystalline sodium aluminosilicate ion-exchange detergency builders are described, for example, in GB 1429143 (Procter & Gamble). The preferred sodium aluminosilicates of this type are the well known commercially available zeolites A and X, and mixtures thereof. Also of interest is the novel zeolite P described and claimed in EP 384070 (Unilever).

Another category of water-insoluble material which can function as a water-softening agent and detergency builder is the layered sodium silicate builders disclosed in US-A-4464839 and US-A-4820439 and also referred to in EP-A-551375.

These materials are defined in US-A-4820439 as being crystalline layered sodium silicate of the general formula

$$NaMSi_x0_{2x+1} . YH_2O$$

where

M denotes sodium or hydrogen,
x is from 1.9 to 4 and y is from 0 to 20.

Quoted literature references describing the preparation of such materials include Glastechn. Ber. 37, 194-200 (1964), Zeitschrift fur Kristallogr. 129, 396-404 (1969), Bull. Soc. Franc. Min. Crist., 95, 371-382 (1972) and Amer. Mineral, 62, 763-771 (1977). These materials also function to remove calcium and magnesium ions from water.

It is customary to use a water-soluble builder (water-softening agent) jointly with aluminosilicate, to enhance water-softening efficacy. Such water-soluble co-builders are generally used in an amount which is not greater than the amount of aluminosilicate, often less than half the amount of aluminosilicate. Water-soluble builders may be organic or inorganic. Inorganic builders that may be present include alkali metal (generally sodium) carbonate; while organic builders include polycarboxylate polymers, such as polyacrylates, acrylic/maleic copolymers, and acrylic phosphonates, monomeric polycarboxylates such as citrates, gluconates, oxydisuccinates, glycerol mono- di- and trisuccinates, carboxymethyloxysuccinates, carboxymethyloxymalonates, dipicolinates and hydroxyethyliminodiacetates.

Especially preferred supplementary builders are polycarboxylate polymers, more especially polyacrylates and acrylic/maleic copolymers, and monomeric polycarboxylates, more especially citric acid and its salts.

If a tablet contains only soluble water-softening agent, this may well be sodium tripolyphosphate, which is widely used as a detergency builder in some countries.

When using aluminosilicate or other insoluble detergency builder/water-softening agent it is often a commercial or legislative requirement to avoid phosphates. Some tablet compositions of the invention do not contain more than 5 wt% of inorganic phosphate builders, and are desirably substantially free of phosphate builders. However, tableted compositions containing some phosphate builder are also within the broad scope of the invention. In particular, a tablet or region thereof may contain at least 15 wt% insoluble water softening agent, with phosphate or other water-soluble builder in addition.

Polymer binder

Tablets of this invention may include an organic water-soluble polymer, applied as a coating to some of the constituent particles, and serving as a binder when the particles are compacted into tablets. This polymer may be a polycarboxylate included as a supplementary builder, as mentioned earlier.

It is preferred that such a binder material, if present, should melt at a temperature of at least 35°C, better 40°C or above, which is above ambient temperatures in many temperate countries. For use in hotter countries it will be preferable that the melting temperature is somewhat above 40°C, so as to be above the ambient temperature.

For convenience the melting temperature of the binder material should be below 80°C.

Preferred binder materials are synthetic organic polymers of appropriate melting temperature, especially polyethylene glycol. Polyethylene glycol of average molecular weight 1500 (PEG 1500) melts at 45°C and has proved suitable. Polyethylene glycol of higher molecular weight, notably 4000 or 6000, can also be used.

Other possibilities are polyvinylpyrrolidone, and polyacrylates and water-soluble acrylate copolymers.

The binder may suitably be applied to the particles by spraying, e.g. as a solution or dispersion. If used, the binder is preferably used in an amount within the range from 0.1 to 10% by weight of the tablet composition, more preferably the amount is at least 1% or even at least 3% by weight of the tablets. Preferably the amount is not over 8% or even 6% by weight unless the binder serves some other additional function.

Tablets may include other ingredients which aid tableting. Tablet lubricants include calcium, magnesium and zinc soaps (especially stearates), talc, glyceryl behapate, sugar Myvatex (Trade Mark) TL ex Eastman Kodak, polyethylene glycols, and colloidal silicas (for example, Alusil (Trade Mark) ex Crosfield Chemicals Ltd).

As mentioned above, compositions of this invention may be embodied as detergent compositions for use in fabric washing, in which case the composition will generally contain from 15 to 60% by weight of detergency builder, notably water-insoluble aluminosilicate, together with 5 to 50% by weight of one or more detergent-active compounds. Such a composition may well contain from 0.5 to 15% by weight of a supplementary builder, notably polycarboxylate, and also other detergency ingredients.

Another possibility is that the invention may be embodied in tablets whose principal or sole function is that of removing water hardness. In such tablets the water-softening agents, especially water-insoluble aluminosilicate, may provide from 50 to 98% of the tablet composition. A water-soluble supplementary builder may well be included, for instance in an amount from 2% to 30wt% of the composition.

Water-softening tablets embodying this invention may include some detergent active. Notably, water-softening tablets may include nonionic surfactant which can act as a lubricant during tablet manufacture and as a low foaming detergent during use. The amount may be small, e.g. from 0.2 or 0.5% by weight of the composition up to 3% or 5% by weight.

Detergent Tablets

Tablets for use in fabric washing will generally contain from 5% to 50% by weight of detergent active, preferably from 5% or 9wt% up to 40% or 50wt%. Detergent-active material present may be anionic (soap or non-soap), cationic, zwitterionic, amphoteric, nonionic or any combination of these.

Anionic detergent-active compounds may be present in an amount of from 0.5 to 40 wt%, preferably from 2% or 4% to 30% or 40wt%.

Synthetic (i.e. non-soap) anionic surfactants are well known to those skilled in the art. Examples include alkylbenzene sulphonates, particularly sodium linear alkylbenzene sulphonates having an alkyl chain length of $C_8$-$C_{15}$; olefin sulphonates; alkane sulphonates; dialkyl sulphosuccinates; and fatty acid ester sulphonates.

Primary alkyl sulphate having the formula

$$ROSO_3^- \; M^+$$

in which R is an alkyl or alkenyl chain of 8 to 18 carbon atoms especially 10 to 14 carbon atoms and $M^+$ is a solubilising cation, is commercially significant as an anionic detergent active. It is frequently the desired anionic detergent and may provide 75 to 100% of any anionic non-soap detergent in the composition.

In some forms of this invention the amount of non-soap anionic detergent lies in a range from 0.5 to 15 wt% of the tablet composition.

It may also be desirable to include one or more soaps of fatty acids. These are preferably sodium soaps derived from naturally occurring fatty acids, for example, the fatty acids from coconut oil, beef tallow, sunflower or hardened rapeseed oil.

Suitable nonionic detergent compounds which may be used include in particular the reaction products of compounds having a hydrophobic group and a reactive hydrogen atom, for example, aliphatic alcohols, acids, amides or alkyl phenols with alkylene oxides, especially ethylene oxide either alone or with propylene oxide.

Specific nonionic detergent compounds are alkyl ($C_{8-22}$) phenol-ethylene oxide condensates, the condensation products of linear or branched aliphatic $C_{8-20}$ primary or secondary alcohols with ethylene oxide, and products made by condensation of ethylene oxide with the reaction products of propylene oxide and ethylene-diamine. Other nonionic detergent compounds include alkylpolyglycosides, long-chain amine oxides, tertiary phosphine oxides, and dialkyl sulphoxides.

Especially preferred are the primary and secondary alcohol ethoxylates, especially the $C_{9-11}$ and $C_{12-15}$ primary and secondary alcohols ethoxylated with an average of from 5 to 20 moles of ethylene oxide per mole of alcohol.

In certain forms of this invention the amount of nonionic detergent lies in a range from 4 to 40%, better 4 or 5 to 30% by weight of the composition.

Many nonionic detergent-active compounds are liquids. These may be absorbed on a porous carrier. Preferred carriers include zeolite; zeolite granuled with other materials, for example Wessalith CS (Trade Mark), Wessalith CD (Trade Mark) or Vegabond GB (Trade Mark); sodium perborate monohydrate; Burkeite (spray-dried sodium carbonate and sodium sulphate as disclosed in EP-A-221776 of Unilever); and layered sodium silicate as described in US-A-4664839.

Bleach System

Tableted detergent compositions according to the invention may contain a bleach system. This preferably comprises one or more peroxy bleach compounds, for example, inorganic persalts or organic peroxyacids, which may be employed in conjunction with activators to improve bleaching action at low wash temperatures. If any peroxygen compound is present, the amount is likely to lie in a range from 10 to 25% by weight of the composition.

Preferred inorganic persalts are sodium perborate monohydrate and tetrahydrate, and sodium percarbonate, advantageously employed together with an activator. Bleach activators, also referred to as bleach precursors, have been widely disclosed in the art. Preferred examples include peracetic acid precursors, for example, tetraacetylethylene diamine (TAED), now in widespread commercial use in conjunction with sodium perborate; and perbenzoic acid precursors. The quaternary ammonium and phosphonium bleach activators disclosed in US 4751015 and US 4818426 (Lever Brothers Company) are also of interest. Another type of bleach activator which may be used, but which is not a bleach precursor, is a transition metal catalyst as disclosed in EP-A-458397, EP-A-458398 and EP-A-549272. A bleach system may also include a bleach stabiliser (heavy metal sequestrant) such as ethylenediamine tetramethylene phosphonate and diethylenetriamine pentamethylene phosphonate.

As indicated above, if a bleach is present and is a water-soluble inorganic peroxygen bleach, the amount may well be from 10% to 25% by weight of the composition.

Other Ingredients

The detergent tablets of the invention may also contain one of the detergency enzymes well known in the art for their ability to degrade and aid in the removal of various soils and stains. Suitable enzymes include the various proteases, cellulases, lipases, amylases, and mixtures thereof, which are designed to remove a variety of soils and stains from fabrics. Examples of suitable proteases are Maxatase (Trade Mark), as supplied by Gist-Brocades N.V., Delft, Holland, and Alcalase (Trade Mark), and Savinase (Trade Mark), as supplied by Novo Industri A/S, Copenhagen, Denmark. Detergency enzymes are commonly employed in the form of granules or marumes, optionally with a protective coating, in amount of from about 0.1% to about 3.0% by weight of the composition; and these granules or marumes present no problems with respect to compaction to form a tablet.

The detergent tablets of the invention may also contain a fluorescer (optical brightener), for example, Tinopal (Trade Mark) DMS or Tinopal CBS available from Ciba-Geigy AG, Basel, Switzerland. Tinopal DMS is disodium 4,4'-bis-(2-morpholino-4-anilino-s-triazin-6-ylamino) stilbene disulphonate; and Tinopal CBS is disodium 2,2'-bis-(phenyl-styryl) disulphonate.

An antifoam material is advantageously included, especially if the detergent tablet is primarily intended for use in front-loading drum-type automatic washing machines. Suitable antifoam materials are usually in granular form, such as those described in EP 266863A (Unilever). Such antifoam granules typically comprise a mixture of silicone oil, petroleum jelly, hydrophobic silica and alkyl phosphate as antifoam active material, sorbed onto a porous absorbed water-soluble carbonate-based inorganic carrier material. Antifoam granules may be present in an amount up to 5% by weight of the composition.

It may also be desirable that a detergent tablet of the invention includes an amount of an alkali metal silicate, particularly sodium ortho-, meta- or preferably alkali metal silicates at levels, for example, of 0.1 to 10 wt%, may be advantageous in providing protection against the corrosion of metal parts in washing machines, besides providing some measure of building and giving processing benefits.

Further ingredients which can optionally be employed in the detergent tablet of the invention include antiredeposition agents such as sodium carboxymethylcellulose, straight-chain polyvinyl pyrrolidone and the cellulose ethers such as methyl cellulose and ethyl hydroxyethyl cellulose, fabric-softening agents; heavy metal sequestrants such as EDTA; perfumes; and colorants or coloured speckles.

Particle Size and Distribution

A detergent tablet of this invention, or a discrete region of such a tablet, is a matrix of compacted particles.

Preferably the particulate composition has an average particle size in the range from 200 to 2000 μm, more preferably from 250 to 1400 μm. Fine particles, smaller than 180 μm or 200 μm may be eliminated by sieving before tableting, if desired, although we have observed that this is not always essential.

While the starting particulate composition may in principle have any bulk density, the present invention is especially relevant to tablets made by compacting powders of relatively high bulk density, because of their greater tendency to exhibit disintegration and dispersion problems. Such tablets have the advantage that, as compared with a tablet derived from a low bulk density powder, a given dose of composition can be presented as a smaller tablet.

Thus the starting particulate composition may suitably have a bulk density of at least 400 g/litre, preferably at least 500 g/litre, and advantageously at least 700 g/litre.

Granular detergent compositions of high bulk density prepared by granulation and densification in a highspeed mixer/granulator, as described and claimed in EP 340013A (Unilever), EP 352135A (Unilever), and EP 425277A (Unilever), or by the continuous granulation/densification processes described and claimed in EP 367339A (Unilever) and EP 390251A (Unilever), are inherently suitable for use in the present invention.

A tablet of the invention may be either homogeneous or heterogeneous. In the present specification, the term "homogeneous" is used to mean a tablet produced by compaction of a single particulate composition, but does not imply that all the particles of that composition will necessarily be of identical composition. Indeed it is likely that the composition will contain the potassium acetate as separate particles.

The term "heterogeneous" is used to mean a tablet consisting of a plurality of discrete regions, for example layers, inserts or coatings, each derived by compaction from a particulate composition and large enough to constitute from 10 to 90% of the weight of the whole table.

It is possible that the potassium acetate will be contained within one or more but not all such discrete regions of a heterogeneous tablet, such as a layer or an insert. The presence of such a layer or insert could assist break up of the entire tablet when placed in water.

Tableting

Tableting entails compaction of a particulate composition. A variety of tableting machinery is known, and can be used. Generally it will function by stamping a quantity of the particulate composition which is confined in a die.

Tableting may be carried out at ambient temperature or at a temperature above ambient which may allow adequate strength to be achieved with less applied pressure during compaction. In order to carry out the tableting at a temperature which is above ambient, the particulate composition is preferably supplied to the tableting machinery at an elevated temperature. This will of course supply heat to the tableting machinery, but the machinery may be heated in some other way also.

If any heat is supplied, it is envisaged that this will be supplied conventionally, such as by passing the particulate composition through an oven, rather than by any application of microwave energy.

Example 1

Tablets for use in fabric washing were made, starting with a base powder of the following composition:

|  | Parts by weight |
| --- | --- |
| Linear alkylbenzene sulphonate | 8.0 |
| Nonionic detergent | 6.5 |
| Sodium carbonate | 3.5 |
| Soap | 1.0 |
| Sodium carboxymethyl cellulose | 0.5 |

(continued)

| | Parts by weight |
|---|---|
| Zeolite A24 [1] | 28.0 |
| Sodium acetate trihydrate | 3.0 |
| Fluorescer | 0.5 |
| Acrylate maleate copolymer | 2.0 |

1. Maximum aluminium zeolite P from Crosfields.

This powder was mixed with a material to promote disintegration and other detergent ingredients as tabulated below.

| | % by weight |
|---|---|
| Base powder | 50.0 |
| Perborate monohydrate | 14.3 |
| TAED (83% active) granules | 5.5 |
| phosphonate | 0.65 |
| Sodium carbonate | 2.0 |
| Na-disilicate (80%) | 3.7 |
| Antifoam granules | 2.5 |
| Fluorescer granules (15% active) | 1.0 |
| Acrylate maleate copolymer | 1.0 |
| Enzymes | 0.90 |
| Perfume | 0.45 |
| Disintegration aid | 18 |

35g portions of each composition were made into cylindrical tablets of 44 mm diameter, using a Carver hand press with various levels of compaction force.

The strength of these tablets was measured using an Instron universal testing machine to compress a tablet until fracture. The value of diametral fracture stress (DFS) was then calculated using the equation

$$\sigma = \frac{2P}{\pi Dt}$$

where $\sigma$ is the diametral fracture stress in Pascals, P is the applied load in Newtons to cause fracture, D is the tablet diameter in metres and t is the tablet thickness in metres.

The break-up, and dispersion of tablets was measured by a test procedure in which one tablet is placed on a plastic sieve with 2mm mesh size which was immersed in 9 litres of demineralised water at ambient temperature of 22°C and rotated at 200 rpm. The water conductivity was monitored over a period of 30 minutes or until it reached a constant value.

The time for break up and dispersion of the tablet was taken as the time for change in the water conductivity to reach 90% of its final magnitude. This was also confirmed by visual observation of the material remaining on the rotating sieve.

| Disintegration promoter | Compaction force (kN) | Strength (DFS in kPa) | Dissolution ($T_{90}$ in minutes) |
|---|---|---|---|
| 10% sodium citrate dihydrate with 8% K-acetate | 2 | 17.7 | 1.75 |
| | 4 | 42.9 | 5.05 |
| | 6 | 64.5 | 12.0 |

**Claims**

1.  A tablet of a compacted particulate composition wherein the tablet or a region thereof comprises from 15% to 93% by weight of a water-softening agent and salt which is mixed with the water-softening agent, **characterised in that** said salt is 7% to less than 10% by weight of potassium acetate, optionally together with sodium citrate dihydrate such that the total quantity of potassium acetate and sodium citrate dihydrate is from 7% to 50% by weight of the tablet or region thereof.

2.  A tablet according to claim 1 wherein the tablet or said region thereof comprises from 15% to 93% by weight of a water-soluble water-softening agent.

3.  A tablet according to either claims 1 or claim 2 wherein the tablet or said region thereof contains from 50% to 90% by weight of water-insoluble water-softening agent and from 7% to less than 10% by weight of potassium acetate.

4.  A tablet according to either claim 1 or claim 2 wherein the tablet or region thereof also contains 5 to 50% by weight of one or more detergent compounds.

5.  A tablet according to either claim 1 or claim 2 wherein the tablet or said region contains from 15% to 60% by weight of water-insoluble water-softening agent together with 5% to 50% by weight of one or more detergent-active compounds and from 7% to less than 10% by weight of potassium acetate.

6.  A tablet according to any one of the preceding claims wherein the water-softening agent and water-insoluble agent is alkali metal aluminosilicate, crystalline layered silicate or a mixture thereof.

7.  A tablet according to claim 6 wherein alkali metal aluminosilicate provides at least 15% by weight of the tablet or said region thereof.

8.  A tablet according to any one of the preceding claims wherein the tablet or said region thereof contains from 2% to 30% by weight of water-soluble supplementary detergency builder which is a polycarboxylate.

9.  Use of 7 to less than 10% by weight of potassium acetate in a tablet of compacted particulate composition or a region thereof, to enhance the disintegration of the tablet in water, wherein the tablet or region thereof comprises from 15 to 93% by weight of a water-softening agent, and where the potassium acetate may be mixed together with sodium citrate dihydrate, such that the total quantity of potassium acetate and sodium citrate dihydrate is from 7% to 50% by weight of the tablet or region thereof.


**Patentansprüche**

1.  Tablette aus einer verdichteten teilchenförmigen Zusammensetzung, wobei die Tablette oder ein Bereich davon 15 % bis 93 Gew.-% eines Wasser-enthärtenden Mittels und ein Salz umfasst, das mit dem Wasser-enthärtenden Mittel vermischt ist, **dadurch gekennzeichnet, dass** das Salz 7 % bis weniger als 10 Gew.-% Kaliumacetat, gegebenenfalls zusammen mit Natriumcitratdihydrat, ist, sodass die Gesamtmenge an Kaliumacetat und Natriumcitratdihydrat 7 % bis 50 Gew.-% der Tablette oder eines Bereichs davon ausmacht.

2.  Tablette nach Anspruch 1, wobei die Tablette oder der Bereich davon 15 % bis 93 Gew.-% eines Wasser-löslichen, Wasser-enthärtenden Mittels umfasst.

3.  Tablette nach Anspruch 1 oder Anspruch 2, wobei die Tablette oder der Bereich davon 50 % bis 90 Gew.-% Wasserunlösliches, Wasser-enthärtendes Mittel und 7 % bis weniger als 10 Gew.-% Kaliumacetat enthält.

4.  Tablette nach Anspruch 1 oder Anspruch 2, wobei die Tablette oder ein Bereich davon auch 5 bis 50 Gew.-% von einer oder mehreren Waschmittelverbindungen enthält.

5.  Tablette nach Anspruch 1 oder Anspruch 2, wobei die Tablette oder der Bereich davon 15 % bis 60 Gew.-% von Wasserunlöslichem, Wasser-enthärtendem Mittel, zusammen mit 5 % bis 50 Gew.-% von einer oder mehreren Waschmittelaktivstoffverbindungen und 7 % bis weniger als 10 Gew.-% Kaliumacetat enthält.

**6.** Tablette nach einem der vorangehenden Ansprüche, wobei das Wasser-enthärtende Mittel und das Wasser-unlösliche Mittel Alkalimetallaluminosilicat, kristallines Schichtsilicat oder ein Gemisch davon ist.

**7.** Tablette nach Anspruch 6, wobei Alkalimetallaluminosilicat mindestens 15 Gew.-% der Tablette oder des Bereichs davon bereitstellt.

**8.** Tablette nach einem der vorangehenden Ansprüche, wobei die Tablette oder der Bereich davon 2 % bis 30 Gew.-% Wasser-löslichen, ergänzenden Waschmittel-Builder, der ein Polycarboxylat darstellt, enthält.

**9.** Verwendung von 7 bis weniger als 10 Gew.-% Kaliumacetat in einer Tablette von verdichteter, teilchenförmiger Zusammensetzung oder einem Bereich davon zur Erhöhung des Zerfalls der Tablette in Wasser, wobei die Tablette oder ein Bereich davon 15 bis 93 Gew.-% eines Wasser-enthärtenden Mittels umfasst und wobei das Kaliumacetat mit Natriumcitratdihydrat vermischt werden kann, sodass die Gesamtmenge von Kaliumacetat und Natriumcitratdihydrat von 7 % bis 50 Gew.-% der Tablette oder eines Bereichs davon ausmacht.

**Revendications**

**1.** Comprimé d'une composition particulaire agglomérée dans lequel le comprimé ou une partie de celui-ci comprend de 15 % à 93 % en poids d'un agent d'adoucissement de l'eau et un sel qui est mélangé avec l'agent d'adoucissement de l'eau, **caractérisé en ce que** ledit sel est 7 % à moins de 10 % en poids d'acétate de potassium, facultativement avec du citrate de sodium dihydraté de sorte que la quantité totale d'acétate de potassium et de citrate de sodium dihydraté soit de 7 % à 50 % en poids du comprimé ou d'une partie de celui-ci.

**2.** Comprimé selon la revendication 1, dans lequel le comprimé ou ladite partie de celui-ci comprend de 15 % à 93 % en poids d'un agent d'adoucissement de l'eau soluble dans l'eau.

**3.** Comprimé selon la revendication 1 ou 2, dans lequel le comprimé ou ladite partie de celui-ci contient de 50 % à 90 % en poids d'un agent d'adoucissement de l'eau insoluble dans l'eau et de 7 % à moins de 10 % en poids d'acétate de potassium.

**4.** Comprimé selon la revendication 1 ou 2, dans lequel le comprimé ou une partie de celui-ci contient également de 5 % à 50 % en poids d'un ou de plusieurs composés détergents.

**5.** Comprimé selon la revendication 1 ou 2, dans lequel le comprimé ou ladite partie de celui-ci contient de 15 % à 60 % en poids d'agent d'adoucissement de l'eau insoluble dans l'eau ainsi que de 5 % à 50 % en poids d'un ou de plusieurs composés détergents actifs et de 7 % à moins de 10 % en poids d'acétate de potassium.

**6.** Comprimé selon l'une quelconque des revendications précédentes, dans lequel l'agent d'adoucissement de l'eau et l'agent insoluble dans l'eau est un aluminosilicate de métal alcalin, un silicate cristallin en couche ou un mélange de ceux-ci.

**7.** Comprimé selon la revendication 6, dans lequel l'aluminosilicate de métal alcalin constitue au moins 15 % en poids du comprimé ou de ladite partie de celui-ci.

**8.** Comprimé selon l'une quelconque des revendications précédentes, dans laquelle le comprimé ou ladite partie de celui-ci contient de 2 % à 30 % en poids d'un édificateur de détergence supplémentaire soluble dans l'eau qui est du polycarboxylate.

**9.** Utilisation de 7 % à moins de 10 % en poids d'acétate de potassium dans un comprimé d'une composition particulaire agglomérée ou une partie de celui-ci, afin d'augmenter la désintégration du comprimé dans l'eau, dans laquelle le comprimé ou la région de celui-ci comprend de 15 à 93 % en poids d'un agent d'adoucissement de l'eau, et dans laquelle l'acétate de potassium peut être mélangé avec du citrate de potassium dihydraté de sorte que la quantité totale d'acétate de potassium et de citrate de sodium dihydraté soit de 7 % à 50 % en poids du comprimé ou d'une partie de celui-ci.